(19) **Europäisches Patentamt**
**European Patent Office**
**Office européen des brevets**

(11) **EP 2 706 505 A1**

(12) **EUROPEAN PATENT APPLICATION**

(43) Date of publication:
**12.03.2014 Bulletin 2014/11**

(51) Int Cl.:
***G06T 7/00*** *(2006.01)*

(21) Application number: **13183085.3**

(22) Date of filing: **05.09.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **05.09.2012 IT TO20120763**

(71) Applicant: **Consiglio Nazionale Delle Ricerche 00185 Roma (IT)**

(72) Inventors:
• **ZAPPETTINI, Andrea**
 **I-42100 REGGIO EMILIA (IT)**
• **ZAMBELLI, Nicola**
 **I-42019 SCANDIANO (Reggio Emilia) (IT)**

(74) Representative: **Deambrogi, Edgardo et al Jacobacci & Partners S.p.A. Corso Emilia 8 10152 Torino (IT)**

(54) **A method and system for the three-dimensional reconstruction of formations dispersed in a matrix of a material, in particular of inclusions in crystalline matrices**

(57) What is described is a method for the three-dimensional reconstruction of formations dispersed in a background matrix, particularly inclusions in crystal matrices, comprising the steps of:

- acquiring a set of images on a succession of focal planes of the matrix according to a predetermined direction of observation, in which the images are obtained by observation of the matrix in transmission at one predetermined scanning wavelength at least, and the image elements representing formations dispersed in the matrix exhibit a contrast relative to the image elements of the matrix at the scanning wavelength;

- detecting the three-dimensional contours of the formations dispersed in the matrix;

- identifying the volumes of the formations comprised within the detected contours; and

- spatially locating the formations at the image elements in focus in the identified volumes.

FIG. 3

EP 2 706 505 A1

**Description**

The present invention relates to the analysis of materials, particularly crystalline materials, and more specifically to a method and system for the characterization of the volumetric distribution of formations dispersed in a matrix, particularly inclusions in crystal matrices.

Energy dispersive spectroscopy for the detection of X-rays, gamma rays, charged particles and other particles has been applied in many fields, from medical diagnosis to industrial processes, and from environmental safety to astrophysics. The ability to produce spectroscopic devices operating at ambient temperature is of fundamental importance for the further expansion of applications of this measurement technique, that was born in research labs but has branched out to commercial systems.

Among the semiconductor materials which have been researched in the field of X-ray spectroscopy, cadmium telluride (CdTe) and its variant with added zinc ($Cd_{1-x}Zn_xTe$, or CZT) have aroused considerable interest. These materials are suitable for industrial applications, because they can be used at ambient temperature without the need for cryogenic cooling, enabling compact and transportable measuring equipment to be developed.

There are a number of critical points in the manufacture of detector devices based on semiconductor materials, including CZT. The main objective in growing a material suitable for use in detector devices is to obtain a crystal matrix (a single crystal) with high resistivity, free of extensive defects, inclusions and precipitates which degrade the response of the device.

CdTe and CdZnTe crystals are used for the production of X-ray detectors and sensors operating in the infrared. The growth of the CdTe or CdZnTe crystal inevitably results in the incorporation of inclusions or precipitates of tellurium or of cadmium, depending on the stoichiometric deviation of the charge, although the first case (with tellurium precipitates) is more frequent. These inclusions and precipitates are detrimental to the use of the aforesaid crystals in detector devices. This is because these microscopic defects trap the free electrons generated by the incident radiation, causing significant fluctuations in the total charge acquired by the device, and ultimately having a considerable effect on the energy resolution of a detector device.

It is therefore essential to characterize the material in order to determine the presence of precipitates and/or inclusions. The density of the inclusions provides an indication of the quality of the material, and can be used for the study of the mechanisms of the formation of inclusions during the growth of the material and for testing the efficacy of post-growth heat treatments intended to reduce the concentration of these inclusions.

The characterization of a crystalline material typically takes place using transmission microscopy in the near infrared. This is because the inclusions absorb radiation in the near infrared, whereas the crystal matrix is transparent to these wavelengths. In the conditions of measurement, however, the depth of field of the optical system is usually much less than the thickness of the analyzed specimen, and therefore only some of the inclusions in the specimen are in focus in each image acquired. Consequently, although the detected images can be used to visualize the inclusions, it is impossible to perform a quantitative analysis on the whole volume of the specimen.

For this reason, a system known as "extended focus" has been developed in this field, enabling the whole volume of the specimen under examination to be brought into focus by the acquisition of a set of photographs at different focuses, followed by the processing of the resulting images. However, this procedure gives rise to two problems. Firstly, as regards the inclusions, these are all in focus in the final image, but all information about their position in the depth of the specimen is lost. However, this information is very important, both in the course of research aimed at understanding the reasons for the formation of the inclusions, and in the manufacture of devices, since the presence of an inclusion is harmful to a greater or lesser extent, depending on whether it is close to or far from the surface on which the contact of the device is to be placed. Secondly, if two or more inclusions are vertically aligned they are superimposed, and only the first is counted, causing the system to introduce systematic errors in the process of quantitative analysis.

A method for analyzing inclusions by a three-dimensional approach is described by A.E. Bolotnikov et al., in "Effects of Te Inclusions on the Performance of CdZnTe Radiation Detectors", IEEE Transactions on Nuclear Science, Vol. 55, No. 5, October 2008.

The authors describe a method of acquiring three-dimensional images and algorithms for determining the dimensions and positions of inclusions. The type of analysis conducted provides for the representation of the acquired images for each focal plane, by means of three-dimensional images indicative of the distribution of light intensity of each pixel. In this type of representation, the inclusions appear as three-dimensional surfaces described by Gaussian-like functions. The size of the inclusions (in this case, their diameter) is defined as the standard deviation of the Gaussian distribution multiplied by a factor of proportionality between the standard deviation of a perfect Gaussian distribution and its width at half maximum (FWHM). To locate the inclusions in the images, algorithms for identifying local peak intensities are used, with criteria for accepting or rejecting the positions. The method of image analysis is based on the direct analysis of the intensity of the transmitted light and on the detection of the intensity contrast of the inclusions relative to the matrix of material in which they are dispersed. However, this method is subject to clear limitations in the resolution of small inclusions (as pointed out by the authors themselves) which are well beyond the diffraction limit of the optics.

Furthermore, the counting of inclusions by this method depends to a large degree (up to 30% according to the authors' estimate) on the parameters controlled by the operator.

The article "Three-dimensional mapping of tellurium inclusions in CdZnTe crystals by means of improved optical microscopy" by N. Zambelli et al., in Journal of Crystal Growth, vol. 318, no. 1, pp. 1167-1170, provides a survey of possible procedures for interpreting the results of characterization of CdZnTe and CdTe specimens in terms of the presence of inclusions whose positions and sizes are identified in three dimensions with a resolution of 1 $\mu$m. In this case, a histogram of the concentration of the inclusions as a function of their size is provided, together with representations of the positions of the inclusions in three dimensions and a graph of the concentration of the inclusions along a particular spatial direction. The authors introduce a procedure for acquiring images on different focal planes of the crystal matrix, but no information is given about the procedures by which the inclusions are identified in space, or about the way in which their positions and sizes are determined. There is a known way of determining the positions and sizes of investigated inclusions using the methods of analysis described in A.E. Bolotnikov et al., *"Effects of Te Inclusions on the Performance of CdZnTe Radiation Detectors",* cited above. The US patent application US 2006/0033026 describes an imaging system for the chemico-physical analysis of materials, based on the use of a microscope operating in the visible and near infrared spectra and on the processing of the radiation spectra transmitted, reflected, emitted and scattered by the specimen. US 2006/0033026 describes the acquisition of a set of images on successive discrete focal planes for the reconstruction of a volumetric image. The method for processing the set of images comprises background noise correction, binarization of the images for the identification of the number and sizes of inclusions in a volume of material under examination, and reconstruction of a volumetric representation using the nearest neighbour algorithm or more advanced techniques of iterative deconvolution. This method is based on an analysis of the "contrast" between bright areas of the crystal matrix and dark areas of inclusions, and, as reported by the authors, is dependent on the illumination conditions.

The algorithm used in the patent is, disadvantageously, dependent on the operator and on the illumination conditions of the specimen under examination. The method used to identify the position and sizes of the inclusions is based on the adjustment of the binarization threshold. The criterion for the identification of the threshold is that the resulting binary image must be in accordance with the "perception" of the real initial image. The criterion is highly dependent on the operator and is determined by perception, even if a threshold refinement process is carried out afterwards. It is possible, for example, that the threshold might not be uniquely determined for each focal plane investigated, because of possible problems of uniformity of illumination.

The drawbacks of the image analysis methods described above in relation to crystalline materials for radiation detector devices may also be encountered in the analysis of images of volumes of non-crystalline solid materials or volumes of solutions containing dispersed formations (or segregations) to be identified by contrast with the matrix or background structure incorporating them, in the presence of observation wave radiation.

More generally, therefore, it is desirable to generate a three-dimensional reconstruction of formations dispersed in a matrix which exhibit a contrast if observed in transmission at an observation wavelength within the matrix.

The object of the present invention is to provide a method for processing and analyzing images acquired at different depths within a specimen, which can be used to identify the inclusions in a matrix, particularly a crystal matrix, to determine their quantitative and qualitative distribution over the volume of the analyzed specimen, and to generate a reliable three-dimensional reconstruction of the position of the detected inclusions, while avoiding the drawbacks of the prior art.

More generally, the object of the invention is to provide a method for the three-dimensional reconstruction of formations dispersed in a matrix or background material structure which exhibit a contrast in transmission within the matrix.

A further object of the invention is to provide a method for the three-dimensional reconstruction of the distribution of formations dispersed in matrices of material, particularly inclusions in crystal matrices, which can be applied by means of a pre-existing observation and photographic apparatus such as a microscope.

Yet another object of the invention is to provide a method for the three-dimensional reconstruction of the distribution of formations dispersed in matrices of material, particularly inclusions in crystal matrices, which can be implemented in a processing system with a performance comparable to that of a personal computer, with short processing times.

According to the present invention, these objects are achieved by means of a method for the three-dimensional reconstruction of the distribution of formations dispersed in matrices of material, particularly inclusions in crystal matrices, having the characteristics claimed in Claim 1.

Specific embodiments are described in the dependent claims, the content of which is to be considered as an integral part of the present description.

Specifically, the method proposed by the invention for the three-dimensional reconstruction of formations dispersed in a background matrix, particularly inclusions in crystal matrices, is **characterized in that** it comprises the steps of:

- acquiring a set of images at a succession of focal planes of the matrix according to a predetermined direction of observation, said images being obtained by observation of the matrix in transmission at one predetermined scanning wavelength at least, in which the image elements representing formations dispersed in the matrix exhibit a contrast relative to the image elements of the matrix at the scanning wavelength;

- detecting three-dimensional contours representing the formations dispersed in the matrix;
- identifying volumes representing the formations comprised within the detected contours; and
- spatially locating said formations at the image elements in focus in the identified volumes.

According to a preferred aspect of the invention, the detection of the three-dimensional contours of the formations dispersed in the matrix includes a contrast analysis of the images based on the determination of the three-dimensional intensity gradient of the acquired images.

The contrast analysis of the images advantageously comprises an adaptive equalization of the gradient histogram, performed separately on partial regions of the image, including the limitation of the histogram values of each region to a predetermined upper threshold depending upon at least the size of the region.

Conveniently, the method comprises the generation of a set of binary images of the intensity gradient by means of the comparison of the intensity values of the image elements of each image with a predetermined threshold according to Otsu's method.

According to a preferred aspect of the invention, the identification of the volumes of the formations comprised within the detected contours includes morphological processing of areas of the binary images to fill the holes delimited by the detected contours.

Advantageously, the method includes the identification of areas of interest of the matrix containing at least one formation by joining the image areas obtained by filling the holes which are contiguous on consecutive focal planes.

According to a preferred aspect of the invention, the spatial location of said formations includes the identification of a plurality of contiguous image elements in an image of said set for which the coefficients obtained through a two-dimensional wavelet decomposition of the image signal are maximum.

Conveniently, the wavelet decomposition includes a multi-resolution analysis with discrete wavelet transforms based on the family of wavelets generated from the bior2.2 mother wavelet.

Advantageously, the spatial location of said formations includes the determination of the extension of the formation in the plane of best focus comprising said plurality of contiguous image elements for which the coefficients obtained through the wavelet decomposition are maximum.

Even more advantageously, the wavelet decomposition is carried out in the areas of interest of said set of images.

According to a further preferred aspect of the invention, the method comprises the determination of the centre of gravity of a localized formation and its spatial coordinates in a reference system of the matrix.

Conveniently, in the acquisition of a set of images on different focal planes along the direction of observation, the depth interval between consecutive images and/or the number of images in said set are determined as a function of at least one of: the numerical aperture of the objective lens of the optical observation system, the refractive index of the matrix, the wavelength of the scanning radiation, and the thickness of the matrix.

Also according to a further preferred aspect of the invention, the method comprises the acquisition of a plurality of images on the same focal plane and the determination of an average image in which the intensity of each image element is calculated as the average of the intensities of the corresponding image element in the aforesaid plurality of acquired images.

Advantageously, the method comprises a correction of each image of said set of images by comparison with a background image and a dark-field image.

Finally, the method preferably comprises an equalization of the intensity histogram of the whole set of images.

The invention also proposes a system for the three-dimensional reconstruction of formations dispersed in a background matrix, particularly inclusions in crystal matrices, a corresponding computer program, and a computer program product, as claimed.

Specifically, the system for the three-dimensional reconstruction of formations dispersed in a background matrix proposed by the invention comprises:

- means for acquiring a set of images on a succession of focal planes at different depths in a matrix of material; and
- computer means designed to implement a method for the three-dimensional reconstruction of formations dispersed in a background matrix, particularly inclusions in crystal matrices, having the preferred characteristics mentioned above.

According to one aspect of the invention, an image comprises a set of data representing the luminosity of the image elements in a focal plane at which the acquisition device records the image, at a predetermined scanning wavelength for which the formations to be detected exhibit a contrast if observed in transmission within said matrix.

According to a further aspect of the invention, the means for acquiring a set of images include a device for acquiring digital images operating in the near infrared.

Advantageously, said device for acquiring digital images includes an optical microscope in transmission mode.

According to yet another aspect of the invention, said processing means are designed to control the focusing of said device for acquiring digital images on successive scanning planes of the matrix of material.

Conveniently, said means for acquiring a set of images include means for connection to an archival storage device adapted to store databases of a set of images. Briefly, the present invention is based on an innovative method of image analysis which enables each inclusion to be assigned to an appropriate focal plane, in order to achieve the three-dimensional reconstruction of the volumetric distribution of inclusions, and of formations more generally, present in a background material matrix or structure.

The innovative aspects of the invention reside in the method for processing a set of images acquired on different focal planes in the matrix of material under examination in order to obtain the three-dimensional reconstruction of the distribution of the formations dispersed in the matrix, particularly the inclusions in a crystal matrix, and more specifically they reside in the detection of the three-dimensional contours representing the inclusions by calculation of the three-dimensional gradient of the images, in the identification of the volumes representing the inclusions comprised within the detected contours by morphological reconstruction thereof, and in the location of the image elements corresponding to the image areas in focus in the identified volumes, which represent the real position of the inclusion, by means of the determination of the image elements for which the coefficients found by wavelet decomposition of the image signal are maximum.

Neither A.E. Bolotnikov et al., in "Effects of Te Inclusions on the Performance of CdZnTe Radiation Detectors", nor N. Zambelli et al., in "Three-dimensional mapping of tellurium inclusions in CdZnTe crystals by means of improved optical microscopy", describe or suggest a method of analysis for the identification of the inclusions (in terms of their position and size in space) based on a location of the image areas in focus in spatial regions of interest identified from three-dimensional contours, representing the inclusions, that have been found.

A complete method for processing the set of images acquired on different focal planes in a matrix of material under examination preferably comprises the following operations:

- Pre-processing of the images for the correction of the distribution of illumination and contrast, and equalization of the intensity histogram of the whole set of images;
- Determination of the three-dimensional intensity gradient of the acquired images, in such a way as to reveal the actual three-dimensional contours of each formation or inclusion;
- Adaptive equalization of the gradient histogram;
- Creation of a set of binary images of the equalized intensity gradient;
- Identification of the areas comprised within the contours of the formations or inclusions by means of morphological processing operations performed on the binary images, for each image of the set acquired on a focal plane;
- Determination of volumes of the space containing at least one formation or inclusion (regions of interest), by joining the identified image areas which are contiguous on consecutive focal planes;
- In each region of interest, measurement of the focusing of the formation or inclusion by wavelet decomposition and reconstruction of the formation or inclusion in the plane of best focus;
- Determination of the extension of the formation or inclusion, of its centre of gravity, and of its coordinates in three dimensions.

The result of the processing is a complete three-dimensional reconstruction of the positions of the formations dispersed in the matrix; in other words, for each formation, its three-dimensional position in the matrix and its size are determined.

More specifically, the method proposed by the invention delivers a three-dimensional data matrix showing the positions of all the formations in the volume of the specimen of material under examination, by means of which it is possible to obtain useful post-processing data, such as the number of the formations as a function of their size, the total mass of the formations, and the variation of the concentration of formations along any spatial direction, and to display the distribution of the formations in a three-dimensional graph which can be conveniently "rotated" as desired.

The method proposed by the invention is applicable to images acquired by an optical microscope in transmission mode, for example one operating in the near infrared or visible spectrum, equipped with the usual microscope optics for a device for acquiring digital images operating at the wavelengths that are used. More generally, the method is applicable to images acquired by means of a microscope operating in any range of the electromagnetic spectrum, provided that the objects to be analyzed and/or observed within the investigated matrix absorb the radiation, at least partially, in a different manner from the matrix itself, thus giving rise to a contrast image. In the remainder of the description, the term "image" denotes a set of data representing the luminosity of the image elements (pixels) in a focal plane at which the acquisition device records the image, at a predetermined scanning wavelength for which the formations to be detected exhibit a contrast if observed in transmission within the matrix.

The system proposed by the invention includes a device for acquiring images in a succession of focal planes at different depths in a specimen of material of interest, in which the focusing of successive scanning planes of the volume of the specimen is controlled by a processing unit. In particular, the depth interval between one image and another is determined as a function of the selected magnification, the scanning wavelength, the characteristic data of the optics used (for example, the numerical aperture of the objective lens) and of the matrix in which the inclusions are embedded (for example, the refractive index of the material), while the number of planes to be acquired depends not only on the depth interval but also on the thickness of the matrix. A processing program assists the operator in determining the optimal measurement parameters, namely the exposure time of the camera, the number of acquisitions per image, and the number of acquisitions per unit of time.

Advantageously, by comparison with "extended focus" methods, if a plurality of formations are aligned in the direction of observation the system proposed by the invention can identify and characterize all the formations. Even more advantageously, by comparison with the known recognition systems based on the analysis of the intensity contrast, the proposed system can be used to recognize very small formations, even those close to the diffraction limit of the observation and image acquisition optics being used.

The invention is described below in relation to the analysis of inclusions in CdTe and CdZnTe crystals, which are used in industry for the production of X-ray and gamma ray detector devices, and for the manufacture of infrared sensors. However, it can be extended to other crystal matrices for similar applications, for example CdMnTe and CdSTe, and more generally to crystalline semiconductors transparent in the visible or near infrared spectra which exhibit the phenomenon of precipitation or segregation of one of the components. By way of example, the invention is also applicable to gallium arsenide crystal matrices, for precipitates of As in the GaAs matrix.

More generally, the invention can be extended to the three-dimensional reconstruction of formations or segregations dispersed in a matrix which exhibit a contrast if observed in transmission within the matrix. An example of the application of the invention in other sectors, such as the biological field, is the analysis of sea water matrices for the identification and characterization of the volumetric distribution of bacterioplankton cells.

Further characteristics and advantages of the invention will be disclosed more fully in the following detailed description of one embodiment of the invention, provided by way of non-limiting example, with reference to the attached drawings, in which:

Figure 1 is a schematic representation of a system for the implementation of the method proposed by the invention;
Figure 2 is a schematic illustration of the operating principle of the system proposed by the invention;
Figure 3 is a flow diagram of the method proposed by the invention;
Figure 4 shows a pair of images depicting an inclusion of tellurium in a specimen of CZT, namely a raw image (a) and an averaged image (b);
Figure 5 shows a pair of images depicting inclusions of tellurium in a specimen of CZT, namely an averaged image (a) and a corrected image (b);
Figure 6 shows two image histograms, before (a) and after (b) equalization of the histogram;
Figure 7 shows a succession of images in increasing focal planes relating to the calculation of a three-dimensional image gradient;
Figure 8 shows, in a sequence of increasing focal planes, a succession of processed versions of the three-dimensional image gradient, obtained by application of the morphological operators which implement a hole-filling algorithm according to the invention;
Figure 9 is a volumetric representation of a set (stack) of binary images representing the volumes which identify the inclusions;
Figure 10 is a graphic representation of the bior2.2 mother wavelet used in the context of the invention;
Figure 11 is a three-dimensional representation of the inclusions dispersed in a matrix which can be obtained by the method proposed by the invention;
Figure 12 is a histogram of the concentration of the inclusions in the matrix of Figure 11, as a function of their diameter; and
Figure 13 is a diagram showing the concentration of the inclusions in the matrix of Figure 11, along a predetermined direction.

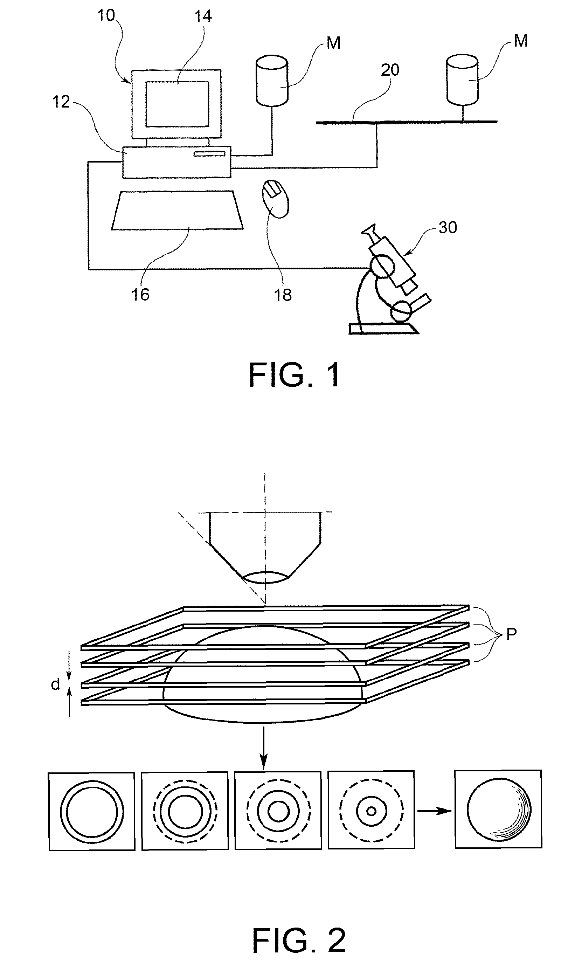

With reference to Figure 1, this shows the essential elements of a system for the three-dimensional reconstruction of formations dispersed in a matrix, particularly inclusions in crystal matrices, based on a set of images such as, by way of non-limiting example, a succession of stratigraphic images on different focal planes of a specimen under examination, which combine to form a volumetric image of the specimen.

The system comprises, for example, a computer workstation 10 of a known type, having a processor subsystem 12, a display device 14, a keyboard 16, a pointing and control device 18 and a connection to a local network (network bus) 20.

An example of a workstation 10 which can be used is a personal computer or similar computer with comparable performance, for example a computer having a 2 GHz Intel Core Duo CPU, 4 Gbytes of RAM, a 256 Gbyte hard disk and a Windows Vista, XP or Windows 7 operating system.

The processor subsystem of the workstation is designed to run a program or a group of programs stored on the hard disc or accessible via the network, and to exhibit the results on the display device 14. The program or groups of programs are processing and calculation programs which implement the method according to the invention, as described in detail below.

The system according to the invention further comprises an archival storage subsystem M, of a known type, integrated with the workstation 10 or connected thereto by means of the network connection 20, and adapted to contain stored databases of sets of images acquired remotely from a specimen under examination. Evidently, the databases can also be stored, if they are of limited dimensions, in the hard disc of the workstation 10 without any modification of the characteristics of the invention. The system may also be arranged for connection to other peripheral input/output devices, local or remote, or may be composed of other computer system configurations, such as a multiprocessor system and a computer system of the distributed type, where the tasks are executed by remote computer devices interconnected by a communications network, and program modules can be stored in both local and remote storage devices.

The system proposed by the invention may also comprise a device 30 for acquiring a set of images in a succession of focal planes at different depths in a specimen of material of interest, in which the focusing of successive scanning planes of the volume of the specimen is controlled by the processing subsystem of the workstation.

In the currently preferred embodiment, the device 30 is a conventional optical microscope equipped with a silicon-based sensor (video camera) designed to acquire images in the near infrared. In order to analyze inclusions in semiconductor matrices having a band gap below that of materials such as those referred to in this description, it may be necessary to use different sensors, based for example on In-GaAs or other materials compatible with the observation wavelengths, and a microscope equipped with the appropriate optics. It is also possible to use non-monochromatic light sources, provided that they have a defined spectral distribution.

The device 30 is also equipped with an automated system for movement along the direction of observation (vertical movement), designed to make the best use of the limited field depth which is characteristic of microscopes. Conveniently, the device 30 is also provided with automatic movement on the observation plane (horizontal movement), enabling a horizontal scan of an extended specimen to be performed automatically.

Figure 2 shows the operating principle of the system. Each image of a set of images, acquired on a different focal plane P along the Z axis (vertical axis), provides information which can be used only for the thickness d (the depth of field or axial resolution) in focus. The remaining parts of the material lying outside this layer appear out of focus. The method proposed by the invention extracts only the useful information from each image and rejects all the components of the out-of-focus images. The end result is a 3D map containing, for each focal plane, the portion of material which is in focus, in other words the inclusions in focus located in the correct spatial position.

The depth interval between one image and another is determined as a function of the selected magnification and the characteristic data of the optics used and of the matrix under examination in which the inclusions are embedded. According to the thickness of the specimen, its refractive index and the objective lens used for the acquisition of the images, the processor subsystem is programmed to determine automatically the total number of images to acquire, so as to optimize the time taken for analysis, measurement and data processing. Preferably, the operator is assisted by a processing program in determining the optimal analysis parameters, namely the exposure time of the acquisition device, the number of acquisitions per image, and the number of images per unit of time. The magnification and resolution of the acquisition device are such that the inclusions of interest, typically in the range from 1 to 50 microns, can be visualized.

Advantageously, the method proposed by the invention is optimized so as to limit the processing time to a few minutes for each complete set of measurements.

The invention further proposes a computer program or group of programs, in particular a computer program on or in a data medium or memory, adapted to implement the invention when loaded into an electronic computing system, for example. This program may use any programming language, and may be in the form of source code, object code or an intermediate code between source and object code, for example in a partially compiled form, or in any other desired form for implementing the method according to the invention.

Finally, the embodiments of the invention comprise a computer program product, which may be a computer storage medium which is readable by an electronic processing system and which encodes a program or group of programs of computer instructions for executing the method proposed by the invention. Specific examples (in a non-exhaustive list) of a computer-readable data medium are any entity or device capable of storing a program, such as a random access memory, a read-only memory, a compact disc memory, or a magnetic recording medium or a hard disc. More generally, the computer program product may also be in the form of a data stream readable by a computer system, which encodes a program of computer instructions, and which can be carried, for example, on a network such as the Internet.

The solutions referred to immediately above are considered to be well known in the art and will not be described further here, since they are not in themselves relevant for the purposes of the application and comprehension of the present invention.

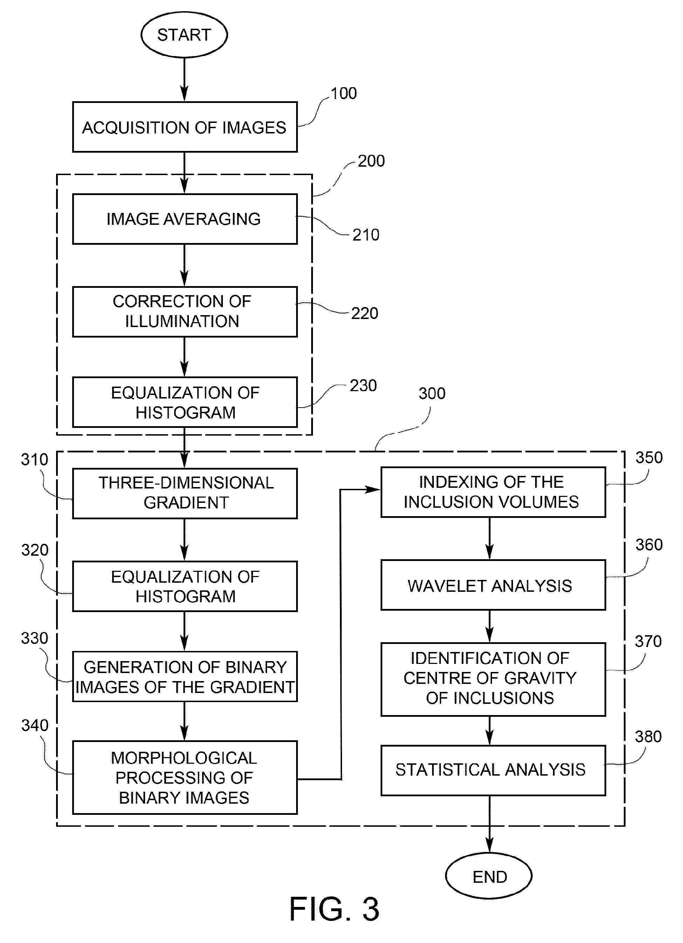

With reference to the flow diagram of Figure 3, the following description provides details of a currently preferred embodiment of the method for the three-dimensional reconstruction of inclusions dispersed in a matrix of crystalline material.

The method proposed by the invention initially includes, in step 100, the acquisition of a set of images of the specimen under examination on a succession of discrete focal planes, carried out by controlling the movement of the recording device in a synchronized manner along the direction of observation. Alternatively, the aforesaid set of images relating to a set of discrete focal planes of observation in a matrix of material may be acquired simply by importing images which have previously been stored in the archival storage subsystem M.

In step 200, one or more of predetermined algorithms for pre-processing the images acquired in step 100 are executed.

Depending on the illumination conditions and the integrity of the specimens, the acquired images may be raw images and may have to be pre-processed before being used for the purposes of the invention.

Usually, raw acquired images are subject to a number of problems, including, most importantly, a low signal to noise ratio and non-uniform illumination.

The first arrangement used to improve the signal to noise ratio is the multiple acquisition of different images, in temporal proximity, on the same focal plane, to enable an average to be found (by the "image averaging" method) in step 210. This method is commonly used to improve the quality of images degraded by random noise, if the temporal resolution of the system can be sacrificed. In the particular case under examination, there is no intention to investigate phenomena which vary rapidly in time, and therefore it is always possible to opt for the acquisition of multiple images with the aim of obtaining an average. The averaging algorithm which is preferably used is based on the calculation of the arithmetic mean of the intensity of each image element (pixel) in the plurality of acquired images for each focal plane. Each image has a signal component that is stable over time and a fluctuating component due to random noise. When the acquired images are averaged, the "real" signal, containing the physical information, remains the same, whereas the random component due to noise tends to be cancelled out over a sufficiently large number of acquisitions. For example, if the total number of acquired images per focal plane is N, the averaged intensity $A(x,y)$ of the pixel having the coordinates $(x,y)$ is given by

$$A(x,y) = \frac{1}{N} \sum_{j=1}^{N} F(j,x,y)$$

where $F(j,x,y)$ represents the pixel with coordinates $(x,y)$ relative to the j-th acquired image. By using modem recording devices, based on CMOS technology for example, it is possible to carry out a large number of acquisitions per unit of time, making the averaging process practically negligible in terms of the overall measurement times.

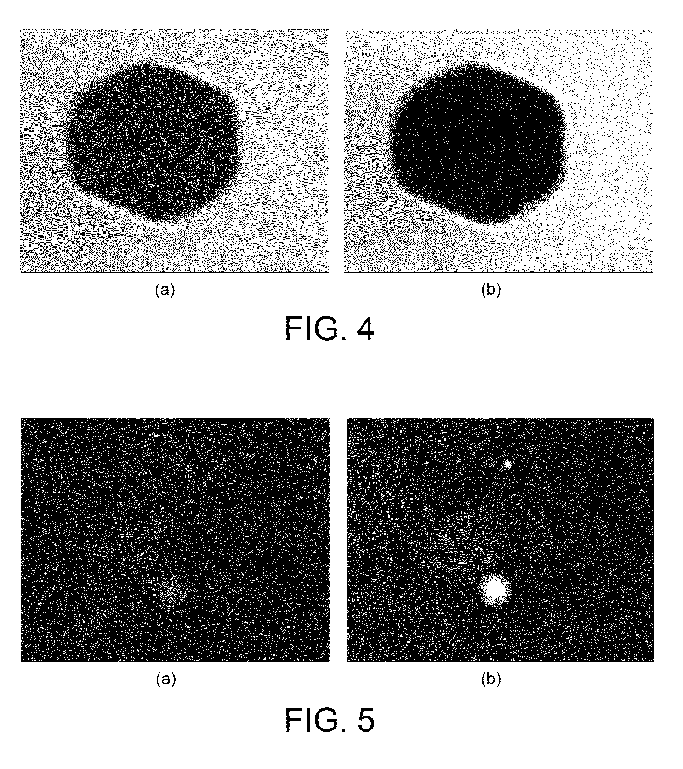

Figure 4 shows an example of the acquisition of images depicting an inclusion of tellurium in a specimen of CZT. The raw image is shown in box (a), while box (b) shows the image obtained by finding an average of 100 raw images, to which the algorithm described above has been applied.

When the appropriately averaged image $A(x,y)$ has been calculated and stored, the actual pre-processing operations can be performed.

In step 220, a procedure of correcting the distribution of illumination over the sensor area of the image acquisition device is carried out.

In addition to the set of raw images, a background image, known as a flat-field frame (indicated by $F\_f$ below), is acquired. This is the image acquired by positioning the specimen on a focal plane remote from the focusing point of each element that it contains. The aim is to obtain information on the distribution of illumination over the sensor in order to correct any non-uniformity thereof. In this case also, the flat-field frame is acquired by an averaging procedure which is the same as that described above for minimizing the contribution of random noise.

A further image required for the pre-processing procedures is the dark-field image, also known as the dark-field frame (indicated by $D\_f$ below). This is simply a measurement of the noise level (electronic and thermal) of the acquisition device, and is acquired by preventing light from falling on the sensor.

The flat-field and dark-field images are acquired by using the same averaging method (with the same number N of acquired images for the calculation of the average) and the same exposure and electronic gain settings.

Finally, the intensity $P(x,y)$ of the pixel with coordinates $(x,y)$ in the images of the set of images undergoing pre-processing is given by:

$$P(x,y) = \frac{A(x,y) - D\_f(x,y)}{F\_f(x,y) - D\_f(x,y)}$$

Figure 5 shows in negative the effect of the application of the flat-field and dark-field correction. The image shown in box (a) is obtained by finding a simple average $A(x,y)$, while box (b) shows the final image $P(x,y)$ in which the effect of correction can be seen. The details emerging in the corrected image are notable.

The final step in the pre-processing of the images, indicated by 230, is the equalization of the histogram of intensity of the whole set of images, averaged and corrected, acquired on the different focal planes. This enables the available intensity spectrum to be fully occupied. For example, in the case of an 8-bit grey scale intensity spectrum, there are $2^8 = 256$ available values, in other words intensities varying from 0 (black) to 255 (white). By contrast with the common method of equalizing the histogram of a single image, in which the spectrum is equalized on the basis of the spectral extension of the image only, in this case the range is defined by all the images making up the analyzed volume. Thus the continuity of intensity is not lost when moving from one focal plane to another adjacent one, while the overall contrast is increased. The i-th final image $I(i,x,y)$, relating to the i-th focal plane, is therefore obtained by subtracting from the intensity $P(i,x,y)$ the minimum intensity out of all the pixels forming the images on all the focal planes. This partial result is then normalized to the maximum value of the spectrum, which is 255 in this case, as follows:

$$I(i,x,y) = \frac{P(i,x,y) - \min\left[P(i,x,y)\right]}{\max\left[P(i,x,y)\right]} \cdot 255$$

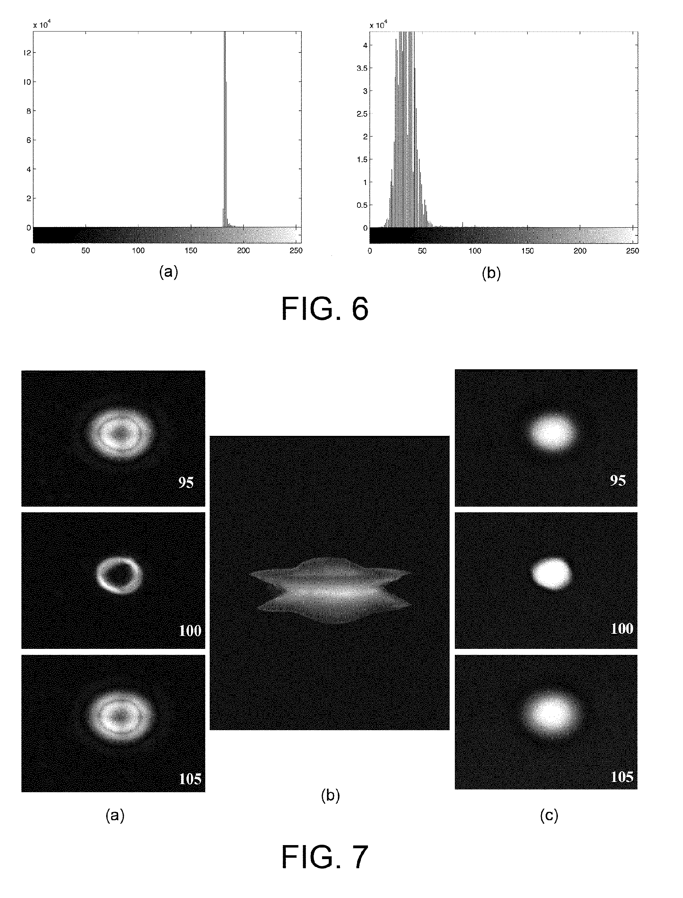

Figure 6 shows an image histogram before and after equalization, in which the increase of the effective intensity range is clearly visible.

After the completion of the image preparation procedure, in step 300 the three-dimensional reconstruction of the position of the inclusions within the inspected volume is started.

First of all, in step 310, the three-dimensional gradient of the previously processed images is determined. The aim is to reveal the contour of the inclusions in the matrix of the inspected specimen (for example, the inclusions of Te in a matrix of CZT), by using the set of images on different focal planes, rather than just the image processed on a single focal plane, the set of images acquired on different focal planes being treated as a volumetric image for all purposes.

Conveniently, the gradient can be determined by means of the Sobel algorithm in its three-dimensional version, known in the art as a method for processing digital images, and particularly for recognizing contours. From the technical point of view, the Sobel algorithm is a differential operator used to determine an approximate value of the gradient of the function which represents the intensity of the image.

An example of a gradient calculated with the 3D Sobel algorithm is shown in Figure 7, which depicts a sequence of increasing focal planes in the proximity of a tellurium inclusion, namely: 95 (the focal plane below the inclusion), 100 (the focal plane where the inclusion is in focus) and 105 (the focal plane above the inclusion). The sequence of images in column (a) shows images representing the gradient, while column (c) shows images representing the original intensities. The bright areas of the images representing the gradient (column (a)) indicate a steep gradient, in other words a high variation of intensity in the original image. Conversely, the dark areas correspond to areas of constant intensity in the original image. Finally, column (b) shows the three-dimensional image created from the intensity profile of the determined gradient. It is evident that the calculation of the 3D gradient provides precise spatial identification of the inclusion in the CZT matrix.

In a subsequent processing step, shown as step 320, adaptive equalization is performed on the histogram of the images of the gradient, AHE. The aim is to improve the contrast of the intensity gradient obtained previously. In particular, a type of adaptive equalization based on the CLAHE (contrast limited adaptive histogram equalization) method has been chosen.

In most cases, standard equalization algorithms use the information obtained from the calculation of the histogram of the image as a whole to perform the same transformation on each pixel, in an undifferentiated way. This procedure is mainly appropriate when the intensity distribution of the pixels is uniform in the image. However, when there are regions which are significantly brighter or darker than the rest, as is the case with intensity images of the 3D gradient, this method is ineffective.

To overcome this drawback, it is advantageous to use algorithms of the AHE type, which operate on small regions of the image, called "tiles". In particular, the algorithm is arranged to generate a number of histograms, each corresponding to a specific tile. Thus the intensity of each pixel is modified by a transformation which is dependent solely on the surroundings of the pixel, or, at the most, the whole tile, instead of the whole image. Thus the contrast of the image can be increased locally, bringing out details which would otherwise be lost.

In the specific case of the CLAHE used in the proposed method, the amplification of the contrast is limited in order to prevent over-amplification of the noise generated by the AHE method itself. This contrast limiting procedure is carried out by setting an upper limit on the values of the histogram for each tile. The value of the latter depends both on the histogram normalization factor and on the dimensions of the tiles. In the proposed method, each of these parameters is optimized and fixed permanently, so that these values represent processing constants only.

When the optimized images of the 3D gradient have been obtained, binary images of the latter can be created, in the next step 330. The aim is to obtain a set of binary images for the different focal planes, which identify the regions in space occupied by the inclusions identified by the gradient. In the present case, all the pixels of the gradient images with intensities above a predetermined threshold are set to "1", while all the other pixels are set to "0". In this way a stack of binary images is created, in which positive logical values identify the presence of inclusions. Otsu's method is conveniently used to determine the value of the threshold. This assumes that the images to be put into binary form can be divided into only two classes of pixels (background and foreground, for example), and, more precisely, that the histogram of the image can be described by a bimodal distribution. The algorithm then calculates the optimal threshold which minimizes the intra-class variance and consequently the threshold, providing a clear separation of the histogram into two classes.

When a set of binary images of the gradient has been obtained, an operation to identify the volumes occupied by the inclusions takes place in step 340. Predetermined morphological operators are applied to the stack of images for the analysis of the resulting geometrical shapes, which can make use of the effect of identification of the inclusion contour, provided in a natural way by the calculation of the three-dimensional gradient. Said morphological operators are designed to implement a hole-filling algorithm, as described, for example, in Soille, P., Morphological Image Analysis: Principles and Applications, Springer-Verlag, 1999, pp. 173-174; they include the combined use of erosion, dilation, opening and closing operators.

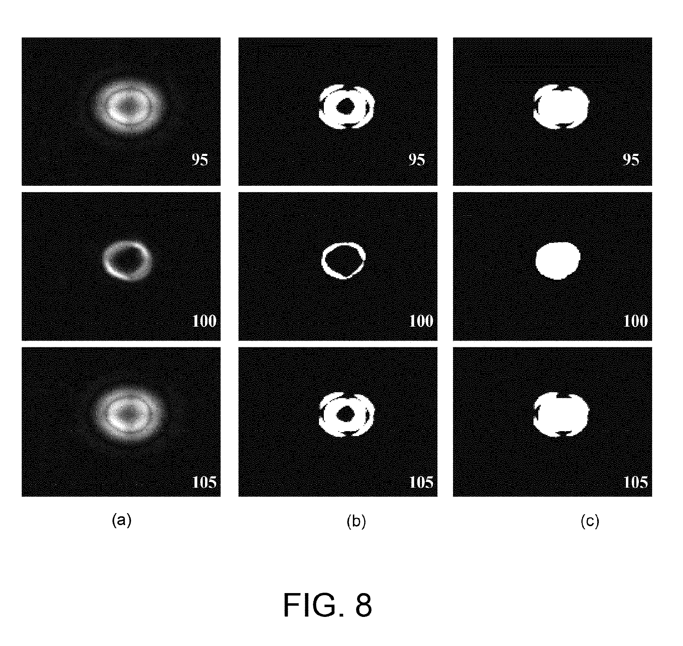

Figure 8 shows, in a sequence of increasing focal planes, a succession of processing operations on the binary images of the gradient according to the morphological operators. Column (a) shows images of the gradient intensity, column (b) shows binary images of the optimized gradient, and column (c) shows binary images of the optimized gradient obtained by applying the hole-filling algorithm.

As can be seen in the images of columns (a) and (b), an annular formation emerges in the focal plane indicated by 100 in the stack of images of the original gradient, providing an unambiguous indication of the presence of an inclusion which is in focus (or very nearly in focus). By using the morphological operators it is possible to obtain a stack of binary images of the gradient, revealing the identified annular formations, each of which is transformed from a closed curve to the area comprised within said closed curve.

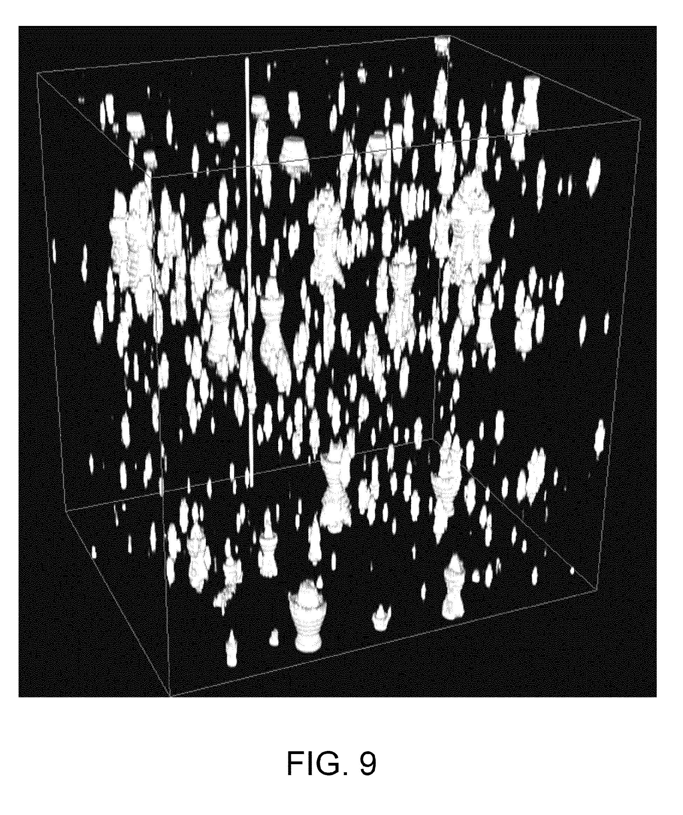

To avoid introducing noise into the final stack of images, it was decided that a selection rule should be set for the identified inclusions. Since the images acquired on different focal planes are deliberately redundant (in other words, the spacing between one image and the next in the direction of observation is less than the depth of field), each inclusion leaves a trace of its best focused position in at least two images. This means that at least two areas corresponding to the same inclusion are obtained in two adjacent images (the area corresponding to the inclusion in focus is the smaller area). The selection rule is used to reject all the three-dimensionally "isolated" pixels which are not created by the presence of inclusions, but are the result of the noise generated by the transformation performed by the morphological operators. The final binary stack is composed of various approximately circular areas (discs) arranged in space according to the volumes which identify the inclusions, in the positions in which they are most fully in focus and therefore in which they are located in reality. A representation of this intermediate result is provided in Figure 9. The next step 350 is that of indexing the volumes identified by the detected areas (discs) in the stack of images, so that these volumes can be processed one by one in an ordered manner.

From the stack of binary images, in which each pixel set to the binary value "1" is part of an isolated volume (the pixels forming the isolated volume are interconnected) in which at least one inclusion is present, the isolated volumes are identified and numbered and a stack of images with integer values is generated, where each volume of connected pixels (in other words, pixels set to "1" in the binary image) is associated with a different positive integer index, indicative of the position assumed by the volume in the numbering of the isolated volumes identified in the matrix of the specimen. For example, all the pixels forming part of the M-th identified isolated volume, containing at least one inclusion, are set to the integer value M. It should be noted that the isolated volumes may also contain more than one inclusion, since two or more sets of discs may be superimposed spatially, generating a single isolated volume containing various inclusions.

The aforesaid indexing procedure comprises numerous stages, culminating in the resolution of a connectivity problem by means of a union-find algorithm (such as that described by Robert Sedgewick, in Algorithms in C, 3rd Ed., Addison-Wesley, 1998, pp. 11-20). The main steps are:

- scanning all the pixels set to 1 in the stack of images (Figure 9) and making a preliminary assignment of a positive integer value (index) to them;
- recording the indices in a table, called the union-find table;
- resolving the equivalence class using the union-find algorithm, enabling a union to be established between contiguous identified image areas on consecutive focal planes;
- re-indexing the pixels on the basis of the calculated equivalence class.

Subsequently, in step 360, a phase of identification of the individual inclusions is carried out by reducing the identified volume to the real size of the inclusion by eliminating the image data representing out-of-focus parts.

For this purpose, each volume indexed in step 350 is examined by means of the wavelet analysis tool.

As is well known, the wavelet transform relates to the representation of a signal as an oscillating waveform which is localized in terms of both time and frequency. In this case, the signal is the image signal formed by the intensity (luminosity) of the pixels belonging to each image in the collection of images under examination, these images being the original images in the determined volumes of interest. In a similar way to Fourier analysis, where a generic signal is broken down into the superimposition of sinusoidal waveforms at different frequencies, wavelet analysis consists in a breakdown of the signal using a known waveform called the mother wavelet. The waveforms representing the bases of wavelet analysis (the mother wavelet and the corresponding family of scaled and translated wavelets) have a limited duration in time; in other words, they are limited in both space and time.

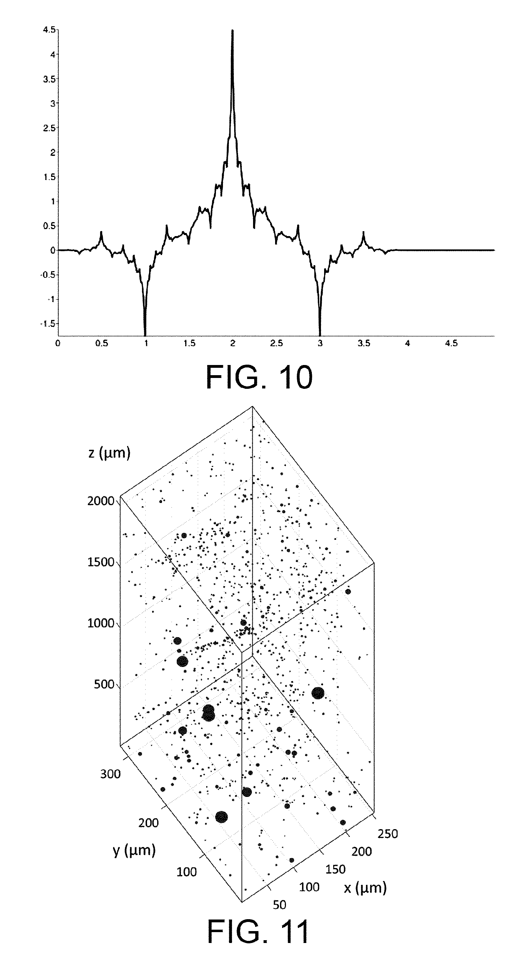

The image signal is decomposed by superimposing mother wavelets, translated and multiplied by scale factors, on each other. Figure 10 shows the mother wavelet form called bior2.2 (biorthogonal wavelet 2.2), as defined for example in "Ten lectures on wavelets" by I. Daubechies, 1994, pp. 271-280, which is used in this context.

Conveniently, the use of wavelet analysis, by contrast with Fourier analysis, enables an optimal local description of extended signals to be provided, with better adaptation to the description of small variations in signals which develop on much larger scales.

In this context, the multi-resolution analysis method is used with discrete wavelet transforms. Within each indexed volume, the algorithm used in this step of the processing executes the two-dimensional wavelet decomposition of the image signal for each focal plane of the volume in question, for the discrete number of images on different focal planes included in the indexed volume. In order to identify the exact position of the inclusions in this volume (and therefore in the whole stack of acquired images), the operation takes place according to the principle that the coefficients extrapolated by the wavelet decomposition are maximum in the areas of the image elements that are in focus. This is equivalent to asserting that the image elements that are in focus in a generic image are richer in information (have more detail) than unfocused image elements, which, in mathematical terms, is manifested in the presence of higher frequencies, in other words higher coefficients in the wavelet decomposition. Essentially, the coefficients of the wavelet decomposition of the various image elements belonging to the various images of the volume under examination are compared with each other. The maximum coefficients, in absolute terms, correspond to the pixels in focus. When the exact spatial position relative to the calculated coefficients is known, the position of the pixels in focus, and therefore the position of the inclusions, can be found.

The usefulness of the indexing carried out in step 350 is very easy to understand in this stage of the processing. This is because the indexing enables the wavelet decomposition to be executed only in the partial volumes of the whole acquired stack of images, where the calculation of the gradient guarantees the presence of inclusions, in the succession identified by the index.

When the maximum coefficients in the examined volume have been identified, the position of the pixels with maximum coefficients is determined on the two-dimensional image, and consequently the position of best focus (the real position) is determined for each inclusion present. This results in a reduction of the identified volume to the real size of the inclusion in the plane concerned, by elimination of the image data representing out-of-focus parts, which from the practical point of view is manifested in the fact that the image elements corresponding to the identified inclusions are transferred to a new "empty" volume in the correct position. The end result is that only the inclusions in the plane of best focus appear in this volume.

On the basis of the results obtained in step 360, an operation is conducted in the next step 370 to identify the centre of gravity of the inclusions, providing data for a subsequent statistical calculation (380).

The pixels with maximum coefficients defined above correspond to very precise areas (discs) in the binary stack of the optimized gradient (Figures 8(c) and 9). The position identified by the centre of gravity of these discs and their area correspond exactly to the spatial coordinates of the inclusions and to the projection of the inclusion on the plane of best focus. Conveniently, by approximating each inclusion to a sphere (to provide an estimate of the volume of material identified and hence to determine a total concentration), the area of the disc identifying the inclusion represents the equivalent surface comprised within a circumference having the radius of the inclusion. Thus the three-dimensional spatial position and the equivalent radius of each detected inclusion can be found.

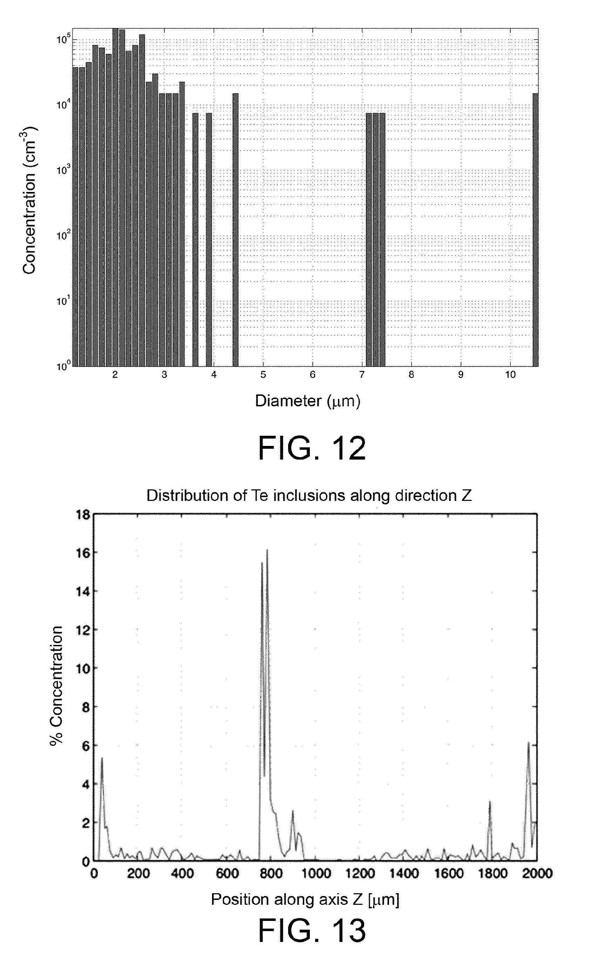

The inclusions can be represented in three dimensions in terms of spheres of equivalent radius, as shown in Figure 11. It is also possible to represent a histogram of the concentration of the inclusions as a function of their diameter, as shown in Figure 12. When the total volume of the examined matrix of material is known, this histogram can be normalized to provide a qualitative evaluation of the concentration of these defects in the analyzed material. It is also possible to represent the concentration of the inclusions along a predetermined spatial direction. For example, for the specimen under examination, Figure 13 shows the concentration of the inclusions along a direction perpendicular to the surface, specifically the direction identified by the axis z in Figure 11. A highly nonhomogeneous variation of the distribution of the inclusions can be observed: this information could not have been found by using known processing methods such as the "extended focus" method.

Advantageously, the invention described here resolves the problem of the processing of images acquired at different depths within the volume of a specimen of crystalline material, in such a way that the inclusions in the volume of the crystal can be identified, their sizes can be determined, and the position of each inclusion in the crystal can be reconstructed in 3D.

Even more advantageously, the method can be used in a reduced processing time by means of a system based on a standard type of optical microscope in transmission mode, for example a commercial optical microscope, and a processing unit with performance comparable to that of a personal computer.

By comparison with the prior art, the present invention makes it possible to obtain a 3D reconstruction of the position of the inclusions in a crystalline volume, to quantify the inclusions in absolute terms, to determine their respective sizes and positions in the specimen, with allowance for those inclusions that are superimposed but located at different depths. The method proposed by the invention can be used to characterize inclusions in a crystal having sizes comparable to the diffraction limit of the optics used.

It should be noted that the embodiment proposed by the present invention in the preceding discussion is provided purely by way of example and does not limit the present invention. A person skilled in the art can easily apply the invention in different embodiments, which, however, do not depart from the principles set out above, and which therefore lie within the scope of protection of the invention defined by the attached claims.

This is particularly true of the possibility of using different algorithms from those mentioned in the stages of pre-processing and processing of the images, provided that they have the same function, in other words are adapted to yield similar results, so that they conform to the procedure of three-dimensional reconstruction of the volumetric distribution of formations dispersed in a matrix, as proposed by the invention.

## Claims

1. Method for the three-dimensional reconstruction of formations dispersed in a background matrix, in particular of inclusions in crystal matrices, **characterized in that** it comprises the steps of:

   - acquiring a set of images at a succession of focal planes of the matrix according to a predetermined direction of observation, said images being obtained by observation of the matrix in transmission at least at one predetermined scanning wavelength, in which the image elements representing formations dispersed in the matrix exhibit a contrast relative to the image elements of the matrix at the scanning wavelength;
   - detecting three-dimensional contours representing the formations dispersed in the matrix;
   - identifying volumes representing the formations comprised within the detected contours; and
   - spatially locating said formations at the image elements in focus in the identified volumes.

2. Method according to Claim 1, wherein the detection of the three-dimensional contours of the formations dispersed in the matrix includes a contrast analysis of the images based on the determination of the three-dimensional intensity gradient of the acquired images.

3. Method according to Claim 2, wherein the contrast analysis of the images comprises an adaptive equalization of the gradient histogram, performed separately on partial regions of the image, including the limitation of the histogram values of each region to a predetermined upper threshold depending upon at least the size of the region.

4. Method according to Claim 2 or 3, comprising the generation of a set of binary images of the intensity gradient by means of the comparison of the intensity values of the image elements of each image with a predetermined threshold according to Otsu's method.

5. Method according to any one of the preceding claims, wherein the spatial location of said formations includes the identification of a plurality of contiguous image elements in an image of said set for which the coefficients obtained through a two-dimensional wavelet decomposition of the image signal are maximum.

**6.** Method according to Claim 5, wherein the wavelet decomposition includes a multi-resolution analysis with discrete wavelet transforms based on the family of wavelets generated from the bior2.2 mother wavelet.

**7.** Method according to Claim 5 or 6, wherein the spatial location of said formations includes the determination of the extension of the formation in the plane of best focus comprising said plurality of contiguous image elements for which the coefficients obtained through the wavelet decomposition are maximum.

**8.** Method according to any one of the preceding claims, comprising the determination of the centre of gravity of a localized formation and its spatial coordinates in a reference system of the matrix.

**9.** Method according to any one of the preceding claims, wherein, in the acquisition of a set of images at different focal planes along the direction of observation, the depth interval between consecutive images and/or the number of images in said set are determined as a function of at least one of: the numerical aperture of the objective lens of the optical observation system, the refractive index of the matrix, the wavelength of the scanning radiation, the thickness of the matrix.

**10.** Method according to any one of the preceding claims, comprising the acquisition of a plurality of images at the same focal plane and the determination of an average image in which the intensity of each image element is calculated as the average of the intensities of the corresponding image element in the aforesaid plurality of acquired images.

**11.** Method according to any one of the preceding claims, comprising a correction of each image of said set of images by comparison with a background image and a dark-field image.

**12.** Method according to any one of the preceding claims, comprising an equalization of the intensity histogram of the whole set of images.

**13.** System for the three-dimensional reconstruction of formations dispersed in a background matrix, comprising:

- means for acquiring a set of images on a succession of focal planes at different depths in a matrix of material; and
- processing means designed to implement a method for the three-dimensional reconstruction of formations dispersed in a matrix according to any one of Claims 1 to 12.

**14.** Computer program or group of programs, executable by a processing system, comprising one or more code modules for implementing a method for the three-dimensional reconstruction of formations dispersed in a matrix according to any one of Claims 1 to 12.

**15.** Computer program product in which a computer program or group of programs according to Claim 14 is stored.

# FIG. 1

# FIG. 2

FIG. 3

(a)                                        (b)

# FIG. 4

(a)                                        (b)

# FIG. 5

FIG. 6

FIG. 7

(a)                              (b)                              (c)

# FIG. 8

FIG. 9

FIG. 10

FIG. 11

FIG. 12

FIG. 13

Europäisches
Patentamt
European
Patent Office
Office européen
des brevets

# EUROPEAN SEARCH REPORT

Application Number

EP 13 18 3085

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | ZAMBELLI N ET AL: "Three-dimensional mapping of tellurium inclusions in CdZnTe crystals by means of improved optical microscopy", JOURNAL OF CRYSTAL GROWTH, vol. 318, no. 1, 1 March 2011 (2011-03-01), pages 1167-1170, XP028164562, ISSN: 0022-0248, DOI: 10.1016/J.JCRYSGRO.2010.10.203 [retrieved on 2010-11-10] * abstract * * paragraphs [0001], [0002], [0003] * ----- | 1-15 | INV. G06T7/00 |
| X,D | US 2006/033026 A1 (TREADO PATRICK J [US] ET AL) 16 February 2006 (2006-02-16) * abstract * * paragraphs [0013], [0014], [0036], [0062], [0063], [0065], [0066], [0074] * ----- | 1-15 | |
| A,D | BOLOTNIKOV A E ET AL: "Effects of Te inclusions on the performance of CdZnTe radiation detectors", NUCLEAR SCIENCE SYMPOSIUM CONFERENCE RECORD, 2007. NSS '07. IEEE, IEEE, PI, 1 October 2007 (2007-10-01), pages 1788-1797, XP031206012, DOI: 10.1109/NSSMIC.2007.4436507 ISBN: 978-1-4244-0922-8 * abstract; figure 4 * * paragraph [II.B] * ----- -/-- | 1-15 | TECHNICAL FIELDS SEARCHED (IPC) G06T |

The present search report has been drawn up for all claims

| Place of search | Date of completion of the search | Examiner |
|---|---|---|
| Munich | 17 December 2013 | Casteller, Maurizio |

EPO FORM 1503 03.82 (P04C01)

Europäisches
Patentamt

European
Patent Office

Office européen
des brevets

# EUROPEAN SEARCH REPORT

**Application Number**

EP 13 18 3085

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | A.G. VALDECASAS ET AL: "On the extended depth of focus algorithms for bright field microscopy", MICRON, vol. 32, no. 6, 1 August 2001 (2001-08-01) , pages 559-569, XP055063940, ISSN: 0968-4328, DOI: 10.1016/S0968-4328(00)00061-5 * abstract * * paragraph [0001] * * page 560, right-hand column, line 19 - page 561, left-hand column, line 4 * * page 561, right-hand column, line 26 - page 562, left-hand column, line 25 * ----- | 1-15 | |
| A | US 2010/303358 A1 (ACHARYYA MAUSUMI [IN]) 2 December 2010 (2010-12-02) * abstract * * paragraphs [0004], [0007], [0008] * ----- | 1-15 | |
| | | | **TECHNICAL FIELDS SEARCHED (IPC)** |

The present search report has been drawn up for all claims

| Place of search | Date of completion of the search | Examiner |
|---|---|---|
| Munich | 17 December 2013 | Casteller, Maurizio |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 13 18 3085

This annex lists the patent family members relating to the patent documents cited in the above-mentioned European search report.
The members are as contained in the European Patent Office EDP file on
The European Patent Office is in no way liable for these particulars which are merely given for the purpose of information.

17-12-2013

| Patent document cited in search report | | Publication date | Patent family member(s) | | Publication date |
|---|---|---|---|---|---|
| US 2006033026 | A1 | 16-02-2006 | US | RE39977 E1 | 01-01-2008 |
| | | | US | 2002113210 A1 | 22-08-2002 |
| | | | US | 2004159789 A1 | 19-08-2004 |
| | | | US | 2006033026 A1 | 16-02-2006 |
| | | | US | 2006049354 A1 | 09-03-2006 |
| | | | US | 2006091311 A1 | 04-05-2006 |
| | | | US | 2006151702 A1 | 13-07-2006 |
| | | | US | 2006157652 A1 | 20-07-2006 |
| | | | US | 2006164640 A1 | 27-07-2006 |
| | | | US | 2006192956 A1 | 31-08-2006 |
| US 2010303358 | A1 | 02-12-2010 | DE | 102009022834 A1 | 09-12-2010 |
| | | | US | 2010303358 A1 | 02-12-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060033026 A

**Non-patent literature cited in the description**

- **A.E. BOLOTNIKOV et al.** Effects of Te Inclusions on the Performance of CdZnTe Radiation Detectors. *IEEE Transactions on Nuclear Science,* October 2008, vol. 55 (5
- **N. ZAMBELLI et al.** Three-dimensional mapping of tellurium inclusions in CdZnTe crystals by means of improved optical microscopy. *Journal of Crystal Growth,* vol. 318 (1), 1167-1170
- **NEITHER A.E. BOLOTNIKOV et al.** *Effects of Te Inclusions on the Performance of CdZnTe Radiation Detectors*
- **N. ZAMBELLI et al.** *Three-dimensional mapping of tellurium inclusions in CdZnTe crystals by means of improved optical microscopy*
- **SOILLE, P.** Morphological Image Analysis: Principles and Applications. Springer-Verlag, 1999, 173-174
- **ROBERT SEDGEWICK.** Algorithms in C. Addison-Wesley, 1998, 11-20
- **I. DAUBECHIES.** *Ten lectures on wavelets,* 1994, 271-280